# EUROPEAN PATENT APPLICATION

(11) **EP 4 808 077 A1**
(43) Date of publication of application: **16.09.2026**
(21) Application number: 25162931.7
(22) Date of filing: 11.03.2025
(51) Int. Cl.: H04L 61/103, H04L 61/5092

(54) **HOST DEVICE AND METHOD FOR HOST DEVICE ASSOCIATED WITH ONE OR MORE ADDRESSES**

(71) Applicant: Huawei Technologies Co., Ltd., Shenzhen, Guangdong 518129 (CN)
(72) Inventor: IANNONE, Luigi, 80992 Munich (DE); FRESSANCOURT, Antoine, 80992 Munich (DE)
(74) Representative: Thun, Clemens

(57) **Abstract**

A host device configured to operate in a network, where the host device is associated with one or more addresses. The host device comprises a processing arrangement configured to associate the one or more addresses to a set of bits in a network layer address field and where the set of bits identifies which address is intended, where the bits in the set of bits are randomly distributed. The processing arrangement is further configured to receive a data packet having a network layer address field, and determine which address to direct the data packet based solely on the set of bits. The disclosed host device is designed to enhance network address management by utilizing a unique addressing scheme that allows for the association of multiple addresses to a single device while maintaining efficient routing and privacy.

## Description

### TECHNICAL FIELD

The present disclosure relates generally to the field of computer networking; and more specifically, to a host device, a network comprising a first host device and a second host device and a method for the host device associated with one or more addresses.

### BACKGROUND

The increasing complexity of modern networking environments, particularly with the widespread adoption of Internetworking Protocol Version 6 (IPv6), has resulted in a significant rise in the number of addresses assigned per device. A single interface often maintains multiple addresses, including link-local, global, privacy-enhanced, and multicast addresses. In multihomed scenarios, where multiple prefixes exist, the number of addresses per device increases further. As a result, it is not uncommon for a single device to have tens of IPv6 addresses associated with each interface. The current IPv6 standards explicitly recommend allowing multiple addresses per prefix per host to support various use cases, without imposing a strict limit on the number of addresses assigned. However, this flexibility creates challenges in efficiently managing network resources and ensuring predictable network performance.

One of the key technical problems arising from this addressing model is the difficulty in dimensioning resources for network infrastructure, such as switches and routers. Since the number of addresses, a device may use is unpredictable and unrelated to the number of physical devices on the network, network devices must continuously allocate resources to track a growing and fluctuating number of addresses. This issue becomes particularly prominent in large-scale broadcast domains, such as Wi-Fi networks and data centers, where physical resource limitations can lead to failures and degraded performance. Furthermore, this dynamic and uncontrolled growth of addresses exposes network devices to security threats, such as Neighbour Discovery (ND) table exhaustion attacks, which can disrupt normal network operations and make infrastructure vulnerable to denial-of-service attacks.

Existing solutions have attempted to address these challenges through techniques, such as prefix delegation, address hopping, and subnetting. While prefix delegation allows assigning entire address prefixes to devices, it forces all local traffic to be routed rather than switched, increasing network overhead and reducing efficiency. The address hopping, which dynamically changes device addresses using cryptographic techniques, typically relies on Network Address Translation (NAT) to maintain session continuity, shifting the scalability issue to the NAT device and weakening privacy protections. The traditional subnetting methods, whether contiguous or non-contiguous, do not mitigate the problem because subnet masks remain publicly visible, and network devices still require to track an unbounded number of addresses, leaving them vulnerable to exhaustion attacks. Thus, there exists a technical problem of inability of existing IPv6 addressing models to efficiently scale and manage resource allocation in network devices, leading to excessive address tracking, resource exhaustion, and vulnerability to ND cache exhaustion attacks, particularly in large-scale network environments.

Therefore, in light of the foregoing discussion, there exists a need to overcome the aforementioned drawbacks associated with the conventional IPv6 addressing model.

### SUMMARY

The present disclosure provides a host device, a network comprising a first host device and a second host device and a method for the host device associated with one or more addresses. The present disclosure provides a solution to the existing problem of inability of existing IPv6 addressing models to efficiently scale and manage resource allocation in network devices, leading to excessive address tracking, resource exhaustion, and vulnerability to ND cache exhaustion attacks, particularly in large-scale network environments. An aim of the present disclosure is to provide a solution that overcomes at least partially the problems encountered in prior art, and provide an improved host device and a method for the improved host device associated with one or more addresses.

The object of the present disclosure is achieved by the solutions provided in the enclosed independent claims. Advantageous implementations of the present disclosure are further defined in the dependent claims.

In one aspect, the present disclosure provides a host device configured to operate in a network, where the host device is associated with one or more addresses. The host device comprises a processing arrangement configured to associate the one or more addresses to a set of bits in a network layer address field and where the set of bits identifies which address is intended, where the bits in the set of bits are randomly distributed. The processing arrangement is further configured to receive a data packet having a network layer address field, and determine which address to direct the data packet based solely on the set of bits.

The disclosed host device is designed to enhance network address management by utilizing a unique addressing scheme that allows for the association of multiple addresses to a single device while maintaining efficient routing and privacy. This is achieved through the processing arrangement that associates the set of bits within the network layer address field, which identifies the intended address for incoming data packets. The random distribution of the bits in the set of bits across the address space not only facilitates a more robust and scalable addressing scheme but also mitigates the risk of address exhaustion, a common vulnerability in traditional networking setups. By incorporating the bits in the set of bits into the suffix of the global address, which comprises the prefix and the suffix address, the host device can dynamically select from a per-prefix address pool, allowing for a flexible allocation of addresses that can adapt to varying network demands. This synergy between the random bit distribution, the structured global address format, and the per-prefix address pool enables the host device to efficiently manage a potentially limitless number of addresses, thereby enhancing privacy through temporary address usage and frequent address renewal, which further protects against tracking and unauthorized access. The overall design not only improves the scalability of the network but also fortifies the network against exhaustion attacks, ensuring a more resilient and secure networking environment.

In an implementation form, the at least some of the bits in the set of bits are non-contiguous.

The non-contiguous bits in the set of bits leads to improved scalability and resource control, allowing for the simultaneous use of a large number of addresses while maintaining accountability and privacy.

In a further implementation form, the set of bits are indicated using extensions to a Router Advertisement protocol.

The use of extensions to the Router Advertisement protocol allows for efficient address allocation and management, reducing the overhead associated with tracking multiple addresses within the same prefix.

In a further implementation form, the processing arrangement is further configured to limit address tracking entries in a Neighbor Discovery Protocol cache to the set of bits only.

The reduction in address tracking entries leads to improved stability and accountability in the network, as well as decreased overhead in large-scale broadcast environments.

In a further implementation form, the processing arrangement is further configured to update the set of bits periodically for enhanced privacy protection without affecting routing.

The periodic update mechanism ensures that address privacy is preserved while maintaining the integrity of routing operations. The periodic updating is required to mitigate risks associated with address tracking and to ensure that privacy is maintained in dynamic network environments.

In a further implementation form, the set of bits are included in a suffix for a global address, the global address comprising a prefix-address and a suffix address, where the set of bits are part of a per-prefix address pool.

This approach reduces the requirement for network devices to track every address of the same prefix, as the network devices only require to monitor the distinct LL-FS combinations.

In a further implementation form, the processing arrangement 104 is further configured to store only the set of bits and the corresponding prefix in a cache.

The selective caching of the set of bits and the corresponding prefixes leads to improved privacy for temporary addresses, as it limits the exposure of address details while still allowing for effective address resolution.

In another aspect, the present disclosure provides a network comprising a first host device and a second host device, where the first host device is associated with a first set of bits and the second host device is associated with a second set of bits.

The disclosed network with two host devices using IPv6 with Link-Local Fractal Subnetting allows both devices to use unlimited IPv6 addresses while only consuming a single entry each in network equipment's Neighbour Discovery cache, dramatically improving resource efficiency and security. This arrangement simultaneously enhances privacy through frequent address rotation, reduces vulnerability to cache exhaustion attacks, and maintains backward compatibility with standard IPv6 routing.

In a yet another aspect, the present disclosure provides a method for a host device associated with one or more addresses. The method comprises associating the one or more addresses to a set of bits in a network layer address field, where the set of bits identifies which address is intended, where the bits in the set of bits are randomly distributed. The method further comprises receiving a data packet having a network layer address field, and determining which address to direct the data packet based solely on the set of bits.

The method provides all the advantages and technical effects of the host device of the present disclosure after execution.

It is to be appreciated that all the aforementioned implementation forms can be combined.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is a block diagram that illustrates various exemplary components of a host device, in accordance with an embodiment of the present disclosure;
FIG. 2 illustrates a random selection of Link-Local Fractal Subnetting (LL-FS) bits from a suffix address of a network layer address field, in accordance with an embodiment of the present disclosure;
FIG. 3 illustrates a network comprising a plurality of networking devices communicating using LL-FS bits, in accordance with an embodiment of the present disclosure;
FIG. 4 illustrates an operational flow of Internetworking Protocol Version 6 (IPv6) with LL-FS bits, in accordance with an embodiment of the present disclosure;
FIG. 5A illustrates an exemplary scenario of random selection of LL-FS bits from a suffix address, in accordance with an embodiment of the present disclosure;
FIG. 5B illustrates an exemplary scenario of a network comprising a number of networking devices communicating using LL-FS bits, in accordance with an embodiment of the present disclosure; and
FIG. 6 is a flowchart of a method for a host device associated with one or more addresses, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

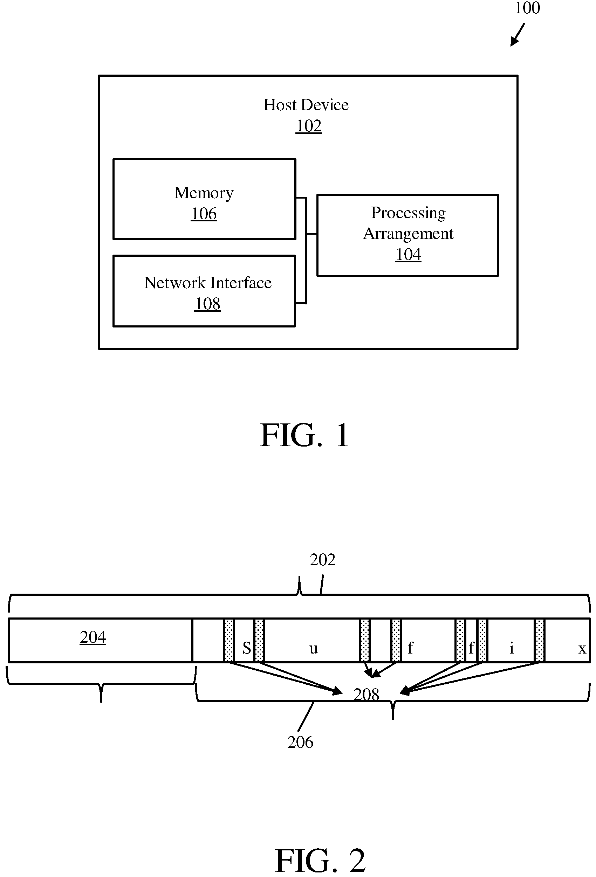

FIG. 1 is a block diagram that illustrates various exemplary components of a host device, in accordance with an embodiment of the present disclosure. With reference to FIG. 1, there is shown a block diagram 100 of a host device 102 comprising a processing arrangement 104. The host device 102 further comprises a memory 106 and a network interface 108 in addition to the processing arrangement 104.

The host device 102 may be referred to as a computing entity that is capable of sending, receiving, and processing data within a network environment. The host device 102 is associated with one or more IP addresses assigned to its network interface. In an Internetworking Protocol Version 6 (IPv6) environment, a single host device can have multiple addresses, including link-local, global, and privacy-enhanced addresses, as well as multicast addresses used for communication and service discovery. The number of addresses per host device can vary dynamically based on network conditions, prefix availability, and privacy mechanisms. Examples of the host device 102 may include, but are not limited to, a smart phone, a personal computer, a laptop, a tablet, an Internet-of-Things (IoT) device, a web server, a cloud server, a database server, and the like.

The processing arrangement 104 may include suitable logic, circuitry, and/or interfaces that is configured to associate the one or more addresses to a set of bits in a network layer address field. The processing arrangement 104 is further configured to execute instructions stored in the memory 106. Examples of the processing arrangement 104 may include, but are not limited to an integrated circuit, a processor, a co-processor, a microprocessor, a microcontroller, a complex instruction set computing (CISC) processor, an application-specific integrated circuit (ASIC) processor, a reduced instruction set (RISC) processor, a very long instruction word (VLIW) processor, a central processing unit (CPU), a state machine, a data processing unit, and other processors or circuits. Moreover, the processing arrangement 104 may refer to one or more individual processors, processing devices, a processing unit that is part of a machine.

The memory 106 may include suitable logic, circuitry, and/or interfaces that is configured to store machine code and/or instructions executable by the processing arrangement 104. Examples of implementation of the memory 106 may include, but are not limited to, an Electrically Erasable Programmable Read-Only Memory (EEPROM), Random Access Memory (RAM), Read Only Memory (ROM), Hard Disk Drive (HDD), Flash memory, a Secure Digital (SD) card, Solid-State Drive (SSD), a computer readable storage medium, and/or CPU cache memory. A computer readable storage medium for providing a non-transient memory may include, but is not limited to, an electronic storage device, a magnetic storage device, an optical storage device, an electromagnetic storage device, a semiconductor storage device, or any suitable combination of the foregoing.

The network interface 108 refers to a communication component within the host device 102 that facilitates data exchange between the host device 102 and other devices communicating over the same network. Examples of the network interface 108 may include but are not limited to, a wireless transceiver, an antenna, a radio transceiver, and the like.

There is provided the host device 102 configured to operate in a network, the host device 102 is associated with one or more addresses, where the host device 102 comprises the processing arrangement 104 configured to associate the one or more addresses to a set of bits in a network layer address field and where the set of bits identifies which address is intended, where the bits in the set of bits are randomly distributed. The term "network layer address field" may be referred to as a designated portion of a data packet that contains the address information utilized for routing and delivering data across a network layer. The term "set of bits" refers to a finite sequence of binary digits, each of which can assume a value of either zero or one, utilized for representing data or instructions in digital systems. The term "address" refers to a unique identifier assigned to a specific location within a data structure or memory space, enabling the retrieval or manipulation of data associated with that location. The term "bits" refers to the fundamental units of information in computing and digital communications, represented as binary values of either 0 or 1. The term "randomly distributed" refers to a statistical arrangement in which elements are allocated in a manner that lacks any discernible pattern or predictability, ensuring that each element has an equal probability of occurring in any given location within a specified space.

The host device 102 operates within a network and is assigned one or more addresses, which are managed dynamically to enhance resource allocation and privacy protection. The processing arrangement 104 in the host device 102 is designed to associate the one or more addresses with a specific set of bits within the network layer address field, ensuring that network devices track only required address components (i.e., the specific set of bits) rather than the full address space. The association of the one or more addresses to the specific set of bits can be achieved through a link-local subnetting method that employs non-contiguous bits, allowing for a flexible addressing scheme. Moreover, the bits in the specific set of bits may be referred to as Link-Local Fractal Subnetting (LL-FS) bits. The host device 102 utilizes the specific set of bits, specifically the LL-FS bits, to identify its associated addresses within the network. By positioning the bits strategically, the host device 102 ensures that no other device on the same link can replicate a particular combination of bits, thereby maintaining address uniqueness. This configuration allows the host device 102 to manage its address pool effectively, as it only requires to track different combinations of LL-FS bits rather than every address within the same prefix. The number of bits in the specific set of bits can be adjusted to control the maximum number of addresses available on a local link, optimizing resource consumption. This approach preserves privacy since the number, position, and lifetime of the LL-FS bits remain local information, preventing exposure of the device's address structure.

Furthermore, the random distribution of bits ensures that the identification of the host device 102 is not straightforward, as the probability of guessing an address is calculated as 2^{-(64-X)}, where X represents the number of bits used for host identification. For instance, with 10 bits allocated for host identification, the probability of an attacker successfully guessing an address is 2⁻⁵⁴, equating to an exceedingly low likelihood. Consequently, even if an attacker monitors network traffic and observes one new address per millisecond, it would take approximately 585,674 years to identify the LL-FS bits, thereby maintaining a robust level of privacy. By randomly distributing the bits within the set, the processing arrangement 104 enables scalable address assignment while reducing the burden on network infrastructure, improving efficiency, and mitigating risks, such as Neighbour Discovery (ND) cache exhaustion attacks.

In accordance with an embodiment, the at least some of the bits in the set of bits are non-contiguous. The term "non-contiguous" refers to a configuration in which elements or segments are not adjacent or sequentially arranged, thereby allowing for the existence of gaps or interruptions between them in a given structure or system. The processing arrangement 104 allows for the configuration of a Link-Local Fractal Subnetting (LL-FS) mask by utilizing non-contiguous bits, which enables precise control over the number of addresses available in a local link. By adjusting the number of bits L, the processing arrangement 104 can manage the resources consumed by addresses, thereby enhancing network performance. This approach facilitates a link-local subnetting method that binds only the selected non-contiguous bits to lower layer namespaces, enhancing the stability of the fractal subnet. The design reduces overhead in large-scale broadcast networks, such as data centers, by improving neighbor discovery processes. Additionally, the use of non-contiguous bits leads to mitigate the effectiveness of ND cache exhaustion attacks by coalescing addresses, which further streamlines resource management. Moreover, the use of non-contiguous bits in the LL-FS mask leads to improved scalability and resource control, allowing for the simultaneous use of a large number of addresses while maintaining accountability and privacy.

In accordance with an embodiment, the set of bits are indicated using extensions to a Router Advertisement protocol. The term "Router Advertisement protocol" refers to a network protocol utilized in IPv6 that enables routers to disseminate information regarding their presence and the network prefix to which they are connected, thereby facilitating the automatic configuration of network devices within a local area network. In an implementation scenario, the set of bits can be indicated through extensions to the Router Advertisement protocol, allowing devices to receive specific configuration information from routers. This is achieved by modifying the number of bits L, which controls the maximum number of addresses available on a local link. By utilizing prefix-delegation relay, a whole prefix can be assigned to a network device, enabling it to use multiple addresses within that prefix. This approach scales with the size of the local network, as the number of prefixes correlates with the number of devices. Instead of tracking every address within the same prefix, devices only require to manage different combinations of the LL-FS bits per prefix, streamlining address management. The use of extensions to the Router Advertisement protocol allows for efficient address allocation and management, reducing the overhead associated with tracking multiple addresses within the same prefix. In another implementation scenario, the host device 102 may use another technique to identify the set of bits.

In accordance with an embodiment, the set of bits are included in a suffix for a global address, the global address comprising a prefix-address and a suffix address, where the set of bits are part of a per-prefix address pool. The term "global address" refers to a unique identifier that is universally recognized across different networks, enabling the identification and routing of data to a specific endpoint regardless of the local addressing conventions employed. The term "prefix-address" refers to a portion of a network address that identifies the network segment and is utilized for routing purposes within a hierarchical addressing scheme. The term "suffix address" refers to the segment of the network address that specifies an individual device or host within the identified network segment, thereby facilitating unique identification within that subnet. The term "per-prefix address pool" refers to a distinct collection of network addresses that is allocated to each individual prefix within a hierarchical addressing scheme, enabling efficient management and distribution of address resources across various subnets.

The global address is structured by combining the prefix address with the suffix address, where the prefix address is allocated to a network device, allowing it to utilize multiple addresses within that prefix. This structure enables the use of a large number of addresses without depleting local network resources, thus enhancing the network's resilience against exhaustion attacks. The suffix address is derived from a selection of bits that can be randomly assigned, which contributes to address privacy by frequently changing the temporary addresses used. The host device 102 utilizes a global address structure where the specific set of bits is designated as the suffix. The suffix is derived from a larger address space, where the total address size is denoted as N bits, and the prefix occupies P bits, leaving S bits for the suffix (supporting data). A random selection of L bits from these S bits is employed as LL-FS bits, which allows for unique address combinations while maintaining the same prefix. For instance, in a global address like 2001:0db8::/64, different devices can generate addresses by varying the LL-FS bits while keeping the prefix constant. This approach reduces the requirement for network devices to track every address of the same prefix, as the network devices only require to monitor the distinct LL-FS combinations.

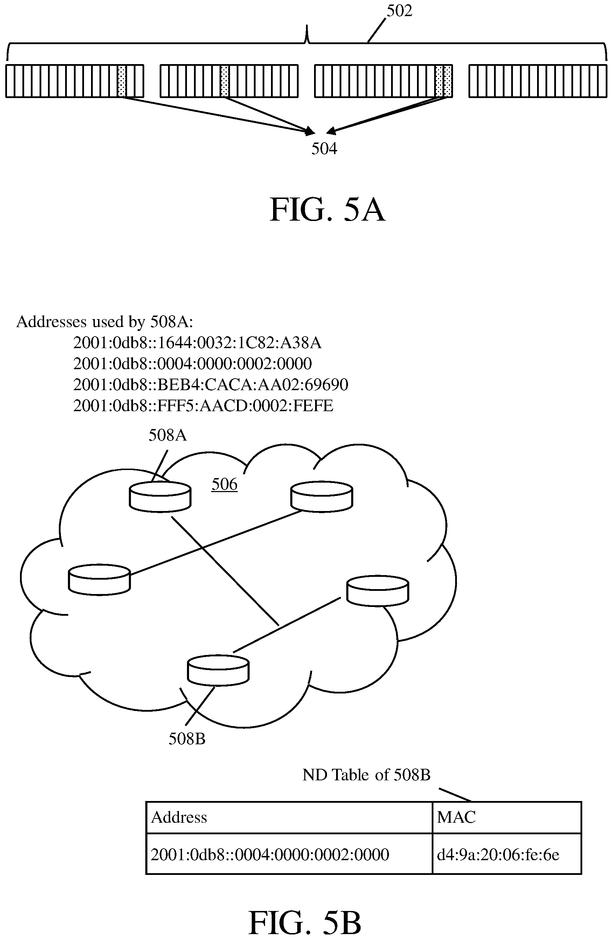

For instance, in a network utilizing the global prefix 2001:0db8::/64, a link employs LL-FS bits, which designates 4 bits within the 64-bit suffix address. The LL-FS bits are randomly selected, allowing the network devices to generate unique addresses while maintaining the same LL-FS bits. For instance, device A can use the LL-FS bits set to 1010, resulting in addresses like 2001:0db8::1644:0032:1C82:A38A. The device B, using the LL-FS bits set to 1110, can generate a different address, such as 2001:0db8::4:0100:0002:0000. This approach enables multiple devices to coexist on the same network without address conflicts, as the multiple network devices can share the same prefix while differing in their suffixes, provided their LL-FS bits are distinct. An exemplary implementation scenario, is described in detail, for example, in FIGs. 5A and 5B.

In accordance with an embodiment, the processing arrangement 104 is further configured to store only the set of bits and the corresponding prefix in a cache. The processing arrangement 104 is configured to efficiently manage address storage by caching only the specific set of bits (i.e., the LL-FS bits) and their corresponding prefix. This is achieved by utilizing the global prefix, such as 2001:0db8::/64, in conjunction with the locally defined LL-FS that employs a random selection of bits from the suffix. By limiting the cache to only the unique combinations of LL-FS bits, the processing arrangement 104 reduces the requirement for tracking every address under the same prefix. The configuration allows for a precise determination of the number of bits used for LL-FS, ensuring that the local information remains private. This addressing scheme enhances the overall efficiency of address management in the network, as it minimizes the data stored while maintaining the required functionality. The selective caching of the specific set of bits and the prefixes leads to improved privacy for temporary addresses, as it limits the exposure of address details while still allowing for effective address resolution.

The processing arrangement 104 is further configured to receive a data packet having a network layer address field, and determine which address to direct the data packet based solely on the set of bits. The term "data packet" refers to a formatted unit of data carried by a packet-switched network, which encapsulates the payload along with control information such as source and destination addresses, sequencing information, and error-checking data to facilitate the transmission and routing of information across network nodes. The host device 102 utilizes a unique combination of bits, specifically the LL-FS bits, to determine the appropriate address for directing the received data packet. In an exemplary scenario, a device A employs the bit pattern 1010, which is fixed in the same position across multiple addresses. This ensures that no other device on the same link can replicate this bit pattern, thereby maintaining address uniqueness. By varying the number of bits used for LL-FS, the host device 102 can effectively manage the total number of addresses available within the local link. This approach allows for efficient address allocation and minimizes potential conflicts among devices (e.g., switches or routers) on the network. Additionally, the use of the fixed bit pattern for address determination leads to a streamlined process for packet routing, reducing the likelihood of address conflicts and optimizing resource utilization within the network.

In accordance with an embodiment, the processing arrangement 104 is further configured to update the set of bits periodically for enhanced privacy protection without affecting routing. The term "privacy protection" refers to the methodologies and technologies employed to safeguard personal and sensitive information from unauthorized access and disclosure. The term "routing" refers to the process of determining the optimal path for data packets to traverse through a network from a source to a destination, ensuring efficient data transmission and communication. The processing arrangement 104 is configured to periodically update the set of bits to enhance privacy protection by utilizing a temporary address scheme. This approach allows for a large anonymity set, as the number, position, and lifetime of the LL-FS bits remain local information. By selecting appropriate suffix and LL-FS sizes, the host device 102 can maintain a robust addressing scheme that prevents resource exhaustion. The modification of the number of bits L in the LL-FS bits enables control over the maximum number of addresses available on the local link, thus managing address consumption effectively. This periodic update mechanism ensures that address privacy is preserved while maintaining the integrity of routing operations. The periodic updating is required to mitigate risks associated with address tracking and to ensure that privacy is maintained in dynamic network environments. In another implementation scenario, instead of the processing arrangement 104, a new routing advertisement protocol may also be used to update the set of bits periodically for enhanced privacy protection without affecting routing.

In accordance with an embodiment, the processing arrangement 104 is further configured to limit address tracking entries in a Neighbor Discovery Protocol cache to the set of bits only. The term "Neighbor Discovery Protocol" refers to a set of procedures utilized for the identification and management of neighboring nodes within a network, facilitating the discovery of their addresses and capabilities. The term "cache" refers to a storage mechanism that temporarily holds data or information to expedite future access and reduce latency in data retrieval processes. The term "address tracking entries" refers to records maintained within a system that document the mapping of network addresses to their corresponding nodes, enabling efficient management and resolution of address-related queries.

The processing arrangement 104 limits address tracking entries in the Neighbor Discovery Protocol cache by utilizing the specific set of bits (i.e., the LL-FS bits). This approach allows for the accommodation of a defined number of hosts on a local link, as demonstrated by the use of 10 bits, which can identify 1024 hosts. By observing traffic patterns, an attacker would require an impractical amount of time, approximately 585,674 years, to identify the LL-FS bits, assuming one new address is observed every millisecond. This approach reduces the number of addresses that require to be tracked, as only the combinations of the LL-FS bits per prefix are monitored, rather than every address in the local network. Consequently, an effective management of network resources can be achieved while maintaining privacy and reducing the risk of ND Cache exhaustion attacks.

Thus, the host device 102 utilizing the addressing scheme based on the LL-FS bits offers several advantages over traditional host devices that rely on standard IPv6 addressing methods. Unlike conventional systems where each unique address must be individually tracked by network devices, the use of LL-FS bits enables the host device 102 to associate multiple addresses with the specific set of bits in the address suffix. This significantly reduces the burden on network infrastructure, as routers and switches no longer require to store and process the large number of addresses for a single device. By limiting the number of unique entries that require to be maintained, the utilization of the LL-FS bits improves scalability, allowing networks to support a greater number of host devices without encountering resource exhaustion or performance degradation.

Additionally, the use of LL-FS bits enhances security and privacy by enabling frequent address changes without increasing the risk of ND cache exhaustion attacks. In traditional systems, privacy-enhancing address changes create a higher load on network devices, as each new address requires an additional tracking entry. However, with the LL-FS bits, the host device 102 can generate and use multiple temporary addresses while keeping the LL-FS bits constant, allowing network devices to recognize the same host without maintaining excessive address records. This improves anonymity while maintaining efficient resource utilization. Moreover, since the LL-FS bits remain the local-link configuration and do not require to be shared beyond the immediate network, the scheme is fully compatible with existing routing mechanisms and does not introduce additional complexity in network operations.

FIG. 2 illustrates a random selection of Link-Local Fractal Subnetting (LL-FS) bits from a suffix address of a network layer address field, in accordance with an embodiment of the present disclosure. FIG. 2 is described in conjunction with elements from FIG. 1. With reference to FIG. 2, there is shown a network layer address field 202 comprising a prefix address 204 and a suffix address 206. There is further shown a set of bits 208 selected randomly from the suffix address 206.

The prefix address 204 is used for identifying a network and the suffix address 206 is used for identifying an interface. For instance, *N* bits may be the size of the network layer address field 202, where *P* bits are used for the prefix address 204 and *S* bits are used for the suffix address 206, where *S* = *N - P.* From the *S* bits, the set of bits 208, for example, *L* bits, is selected randomly which is used as LL-FS bits. The set of bits 208 (i.e., the LL-FS bits) may be contiguous or non-contiguous in nature. The set of bits 208 (i.e., the LL-FS bits) is used to create a per-prefix address pool(s) in a local link and delegate the created per-prefix address pool(s) to the hosts (e.g., the host device 102). Only bits of the suffix address 206 positioned at the LL-FS mask position are used to identify the interfaces on the local network. An interface can be assigned any number of addresses as long as the set of bits 208 (i.e., the LL-FS bits) remain the same for each address, since the set of bits 208 (i.e., the LL-FS bits) are now used to identify the interface. Other network devices (i.e., switches, routers, etc.) do not require any more to track every address of the same prefix in the local network, rather require to track only the different combinations of the LL-FS bits per prefix.

The total number T of possible addresses in a prefix can be represented by Equation (1) $T = {2}^{s} = {2}^{\left(N-P\right)}$

The total number of possible addresses in a prefix using the LL-FS bits can be represented by Equation (2) $T = {2}^{L}$

By modifying the number of bits L it is possible to control the maximum number of addresses available in a local link, hence controlling the resources consumed by addresses. The number of addresses that each interface can use, without consuming resources in the network can be represented by Equation (3) $T = {2}^{\left(S-L\right)}$

By selecting size of the suffix address 206 and size of the set of bits 208 (i.e., size of the LL-FS bits) it is possible to keep the anonymity set large and temporary addresses can be used, hence privacy remains protected. The exact LL-FS bits selection is a link local information and does not require to be known beyond the local link. The only information to share is the link prefix (i.e., the prefix address 204). Hence, there is no impact in the routing information of network devices communicating in a local network.

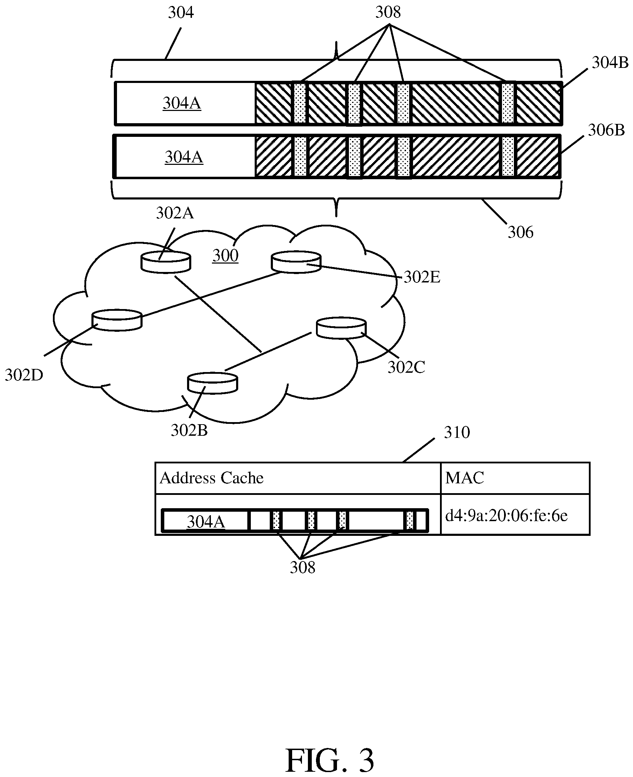

FIG. 3 illustrates a network comprising a plurality of networking devices communicating using LL-FS bits, in accordance with an embodiment of the present disclosure. FIG. 3 is described in conjunction with elements from FIGs. 1 and 2. With reference to FIG. 3, there is shown a network 300 comprising a plurality of networking devices, for example, a first networking device 302A, a second networking device 302B, a third networking device 302C, a fourth networking device 302D and a fifth networking device 302E. There is further shown that the first networking device 302A (for example, device A) uses two network addresses, for example, a first network address 304 and a second network address 306, over the same interface. Each of the first network address 304 and the second network address 306 has the same prefix, that is a prefix address 304A while having different suffix addresses. For example, the first network address 304 has a suffix address 304B and the second network address 306 has a suffix address 306B. There is further shown a cache 310 associated with the second networking device 302B.

In an implementation scenario, the first networking device 302A (i.e., the device A) communicates with the second networking device 302B (e.g., device B) using a set of bits 308 (i.e., the LL-FS bits). The bits in the set of bits 308 are randomly selected from the suffix address of each of the first network address 304 and the second network address 306. The bits selected in the set of bits 308 have the same position and same value for each of the first network address 304 and the second network address 306. By virtue of using the set of bits 308 (i.e., the LL-FS bits) for communicating with the second networking device 302B (i.e., the device B), the second networking device 302B requires to store only the set of bits 308 (i.e., the LL-FS bits) for carrying out the communication with the first networking device 302A (i.e., the device A). In contrast to conventional addressing scheme, where a conventional second networking device requires to store both addresses used by a conventional first networking device leading toe resource exhaustion and performance degradation. Since the set of bits 308 (i.e., the LL-FS bits) is same for each of the first network address 304 and the second network address 306 therefore, only single entry is created in the cache 310 of the second networking device 302B. The created single entry is associated with Media Access Control (MAC) address of the first networking device 302A (i.e., the device A). This means that the first networking device 302A (i.e., the device A) may use a large number of network addresses or changing very often temporary addresses for privacy reason with no impact on the other networking devices.

Moreover, the LL-FS bits for address pooling operates independently within each network link, without requiring to be announced or shared across different links or networks. This allows each link to decide whether or not to implement the LL-FS bits without affecting neighbouring links. Furthermore, the links can independently select the LL-FS bits, and even multiple links can utilize the same bit selection. The flexibility of the LL-FS bits enables links to adopt temporary LL-FS bits, and individual hosts can maintain temporary LL-FS address pools. In multi-homing deployments, different prefixes can be assigned distinct LL-FS configurations, and not all prefixes are required to adopt LL-FS. To facilitate LL-FS bits selection among devices on the same link, existing network mechanisms can be extended, such as introducing a new option in Router Advertisements, integrating a new option in Dynamic Host Configuration Protocol (DHCP), or employing other network configuration methods.

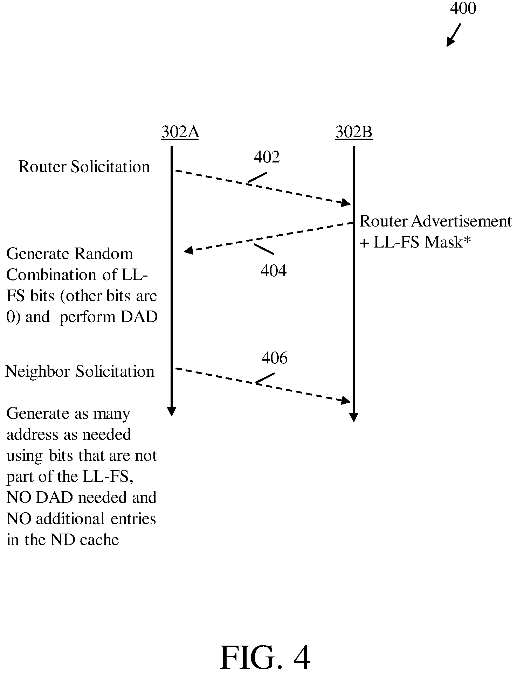

FIG. 4 illustrates an operational flow of Internetworking Protocol Version 6 (IPv6) with LL-FS bits, in accordance with an embodiment of the present disclosure. FIG. 4 is described in conjunction with elements from FIGs. 1, 2 and 3. With reference to FIG. 4, there is shown an operational flow 400 of IPv6 with the set of bits 208 (i.e., the LL-FS bits). The operational flow 400 incudes a series of operations 402 to 406.

The operational flow 400 begins when the first networking device 302A (e.g., a host device) is configured to send a router solicitation message at operation 402, to discover other networking devices (e.g., routers) on the network. The second networking device 302B (e.g., a router) responds with a router advertisement message that includes the LL-FS masks, which defines which specific bits in the address suffix are used for device identification, at operation 404. Upon receiving this information, at operation 406, the first networking device 302A (i.e., the host device) is configured to generate a random combination for these designated LL-FS bits (with other bits set to 0) and performs Duplicate Address Detection (DAD) to ensure no other device is using the same bit combination. After this verification, the first networking device 302A (i.e., the host device) can generate as many IPv6 addresses as required by varying the non-LL-FS bits without requiring additional DAD or creating additional entries in the ND cache. This is the key advantage of using the LL-FS bits in a network comprising multiple networking devices, that is the first networking device 302A (i.e., the host device) can use multiple addresses while only consuming a single entry in network device tables (i.e., in the cache of the second networking device 302B), improving scalability and security while maintaining privacy.

The LL-FS Mask's presence and utilization can be indicated via one of the unused flags in the Router Advertisement header, while the LL-FS Mask itself can be encoded as a Router Advertisement option according to RFC 4861.

FIG. 5A illustrates an exemplary scenario of a random selection of LL-FS bits from a suffix address, in accordance with an embodiment of the present disclosure. FIG. 5A is described in conjunction with elements from FIGs. 1, 2, 3 and 4. With reference to FIG. 5A, there is shown that the LL-FS bits are selected randomly from a suffix address 502 of 64 bits. There is further shown selected positions 504 of the LL-FS bits in the suffix address 502.

For instance, a global prefix 2001:0db8::/64 is used on a link where the LL-FS bits are used. The LL-FS bits include 4 bits, and these bits are randomly selected in the 64 bits of the suffix address 502, as shown in FIG. 5A. The selected positions 504 of the LL-FS bits is fixed for all host devices using the same prefix and can have been communicated via router advertisement messages to other networking devices. Each host device has a unique value for the LL-FS bits, while other bits do not matter and can have random not unique values.

FIG. 5B illustrates an exemplary scenario of a network comprising a number of networking devices communicating using LL-FS bits, in accordance with an embodiment of the present disclosure. FIG. 5B is described in conjunction with elements from FIGs. 1, 2, 3, 4 and 5A. With reference to FIG. 5B, there is shown a network 506 comprising a number of networking devices including a first host device 508A and a second host device 508B.

There is provided the network 508 comprising the first host device 508A and the second host device 508B, where the first host device 508A is associated with a first set of bits and the second host device 508B is associated with a second set of bits. In the network 506, each host device utilizes a unique combination of bits to ensure distinct identification within the same link. For instance, if the first host device 508A employs the LL-FS bits as 1010, the first host device 508A generates a global address of 2001:0db8::4:0000:0002:0000. This unique configuration prevents any other device, such as the second host device 508B, from using the same LL-FS bits in the same position, thereby maintaining address uniqueness. Even if the second host device 508B alters other bits, it cannot replicate the LL-FS bits of the first host device 508A, as seen in the invalid address scenario. Instead, the second host device 508B can select a different LL-FS combination, such as 1110, allowing it to generate a valid global address of 2001:0db8::4:0100:0002:0000. This approach enables host devices to create a single entry per LL-FS address pool, streamlining address management across the network. The use of the LL-FS bits for each of the first host device 508A and the second host device 508B is described in detail in the following way:
For instance, consider that the first host device 508A (e.g., device A) uses a unique value, for example, **1010,** of the LL-FS bits positioned as follows. The selected positions 504 of the LL-FS bits are shown in FIG. 5A.
0000000000000**1**00:00000000**0**0000000:00000000000000**10**:0000000000000000

The selected value and positions of the LL-FS bits result in the following IPv6 global address: 2001:0db8::4:0000:0002:0000. No other network device on the same link can use the same bits in the same position (because they uniquely identify a pool of addresses). For instance, the second host device 508B (e.g., device B) cannot have the same bits 1010 in the same position:
0000000000000**1**00:00000000**0**0000000:00000000000000**10**:0000000000000000

This is not a valid address for the second host device 508B (i.e., the device B) since the first host device 508A (i.e., the device A) already uses the combination 1010 of the LL-FS bits. Even if the second host device 508B (i.e., the device B) sets the other bits in the suffix address differently, like for instance
0001011001000**1**00:00000000**0**0110010:00011100010000**10**:1010001110001010 resulting in the global address 2001:0db8::1644:0032:1C82:A38A is not valid. Indeed, it looks completely different, but the LL-FS bits are the same, and this is not allowed. The second host device 508B (i.e., the device B) can use, for instance, 1110 as value of the LL-FS bits even if the other bits are the same
0000000000000**1**00:0000000**1**00000000:00000000000000**10**:0000000000000000 resulting in the global address 2001:0db8::4:0100:0002:0000, which is different from the one used by the first host device 508A (i.e., the device A). Thus, the first host device 508A (i.e., the device A) and the second host device 508B (i.e., the device B) can use any possible address keeping the LL-FS bits unchanged as 1010 and 1110, respectively. All network device can now, when required, create only one entry per LL-FS address pool, for instance, the addresses:
- 2001:0db8::1644:0032:1C82:A38A
- 2001:0db8::0004:0000:0002:0000
- 2001:0db8::BEB4:CACA:AA02:69690
- 2001:0db8::FFF5:AACD:0002:FEFE
all belong to the first host device 508A (i.e. the device A), because the LL-FS bits are set to 1010 in all the four addresses. In standard IPv6, this would lead to four different entries in ND table of a conventional second host device. In contrast to the conventional IPv6 addressing scheme, a single entry associated to the address 2001:0db8::0004:0000:0002:0000, where all non-LL-FS bits are set to zero, is sufficient. The lookups in data structures indexed by addresses, like in the ND Table, are based only on the prefix and the LL-FS bits. No specific data structure is required, it is sufficient to set to zero all bits that are not part of the LL-FS bits.

In accordance with an embodiment, there is no overlap between the first and second set of bits. By randomly selecting the LL-FS bits from a designated pool, the network 506 can effectively manage address assignments without duplication, allowing devices to coexist without interference. This results in a streamlined address management that prevents conflicts, allowing networking devices to operate efficiently within the same network segment.

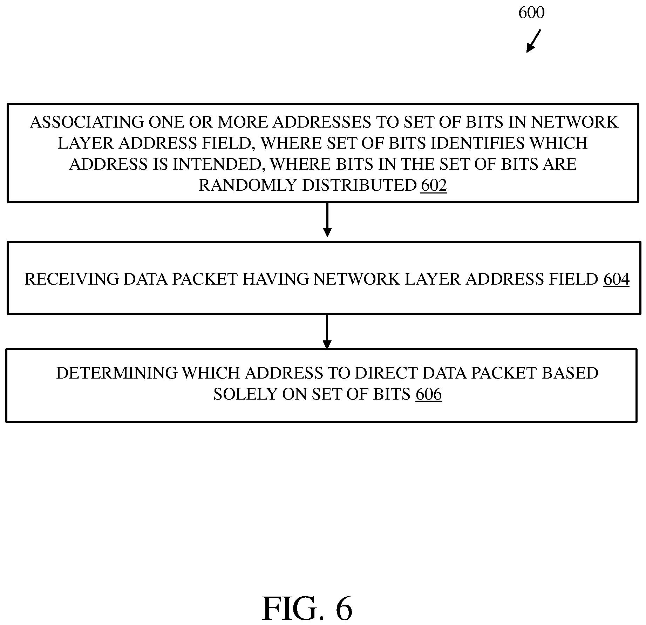

FIG. 6 is a flowchart of a method for a host device associated with one or more addresses, in accordance with an embodiment of the present disclosure. FIG. 6 is described in conjunction with elements from FIGs. 1, 2, 3, 4, 5A and 5B. With reference to FIG. 6, there is shown a method 600 for a host device associated with one or more addresses. The method 600 includes steps 602 to 606. The processing arrangement 104 of the host device 102 is configured to execute the method 600.

There is provided the method 600 for the host device 102 associated with one or more addresses. The method 600 is employed to maintain address uniqueness within a local network, preventing conflicts that could arise from multiple devices attempting to use the same address configuration.

At step 602, the method 600 comprises associating the one or more addresses to a set of bits in a network layer address field, where the set of bits identifies which address is intended, where the bits in the set of bits are randomly distributed. The method 600 involves associating the one or more addresses with a specific set of bits in a network layer address field, such as the LL-FS bits in IPv6 addressing. For instance, when a device A uses the LL-FS bits set to 1010, it creates a unique identifier that prevents any other device on the same link from using the same bits in the same position. This ensures that a device B cannot replicate the address configuration, even if other bits differ, as seen when the device B attempts to use the same LL-FS bits. By modifying the number of bits in the LL-FS bits, the method 600 allows for control over the maximum number of addresses available within a local link, thereby managing address resource consumption. Consequently, devices can maintain distinct entries in their ND tables, as each device can only create one entry per LL-FS address pool, ensuring address uniqueness. Moreover, the random selection of the bits in the specific set of bits enhances privacy by making it difficult for an observer to guess the LL-FS bits, resulting in a low probability of address identification over extended periods.

At step 604, the method 600 further comprises receiving a data packet having a network layer address field. The method 600 involves the host device 102 receiving the data packet that contains a network layer address field, which is required for identifying the source or destination of the data packet.

At step 606, the method 600 further comprises determining which address to direct the data packet based solely on the set of bits. The method 600 involves the host device 102 determining the appropriate address for directing the data packet by analyzing the specific set of bits. The method 600 enables efficient address allocation by allowing multiple devices to coexist on the same link while ensuring unique identification through fixed bit patterns, thus reducing the likelihood of address collisions.

The steps 602 to 606 are only illustrative, and other alternatives can also be provided where one or more steps are added, or one or more steps are provided in a different sequence without departing from the scope of the claims herein.

There is provided a computer program product comprising instructions for performing the method 600 when executed by one or more processors (i.e., the processing arrangement 104 of the host device 102) in a network. The computer program is implemented as an algorithm, embedded in a software stored in the non-transitory computer-readable storage medium having program instructions stored thereon, the program instructions being executable by the one or more processors in the computer system to execute the method 600. The non-transitory computer-readable storage means may include, but are not limited to, an electronic storage device, a magnetic storage device, an optical storage device, an electromagnetic storage device, a semiconductor storage device, or any suitable combination of the foregoing. Examples of implementation of computer-readable storage medium, but are not limited to, an Electrically Erasable Programmable Read-Only Memory (EEPROM), a Random Access Memory (RAM), a Read Only Memory (ROM), a Hard Disk Drive (HDD), a Flash memory, a Secure Digital (SD) card, a Solid-State Drive (SSD), a computer-readable storage medium, and/or a CPU cache memory.

The conventional IPv6 addressing scheme assigns unique addresses to each host, requiring network devices to track and manage a large number of individual addresses, leading to scalability challenges, increased memory usage, and vulnerability to the ND cache exhaustion attacks. In contrast, the IPv6 addressing scheme with LL-FS introduces LL-FS bits, allowing multiple addresses to be grouped and managed efficiently without requiring extensive tracking. This approach significantly reduces the burden on routers and switches, enhances scalability by minimizing the number of entries in ND caches, and improves security by mitigating ND-based attacks. Additionally, the use of the LL-FS bits enables greater flexibility in multi-homing environments by allowing different prefixes to adopt distinct LL-FS configurations, ensuring seamless network operations while maintaining compatibility with existing IPv6 mechanisms.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the present disclosure, which are, for brevity, described in the context of a single embodiment, may also be provided separately or in any suitable combination or as suitable in any other described embodiment of the disclosure.

## Claims

1. A host device (102) configured to operate in a network, the host device (102) being associated with one or more addresses, wherein the host device (102) comprises a processing arrangement (104) configured to
associate the one or more addresses to a set of bits (208) in a network layer address field (202) and wherein the set of bits (208) identifies which address is intended, wherein the bits in the set of bits (208) are randomly distributed,
receive a data packet having a network layer address field, and
determine which address to direct the data packet based solely on the set of bits (208).

2. The host device according to claim 1, wherein the at least some of the bits in the set of bits (208) are non-contiguous.

3. The host device (102) according to claim 1 or 2, wherein the set of bits (208) are indicated using extensions to a Router Advertisement protocol.

4. The host device (102) according to any preceding claim, wherein the processing arrangement (104) is further configured to limit address tracking entries in a Neighbor Discovery Protocol cache to the set of bits (208) only.

5. The host device (102) according to any preceding claim, wherein the processing arrangement (104) is further configured to update the set of bits (208) periodically for enhanced privacy protection without affecting routing.

6. The host device (102) according to any preceding claim, wherein the set of bits (208) are included in a suffix for a global address, the global address comprising a prefix-address and a suffix address, wherein the set of bits (208) are part of a per-prefix address pool.

7. The host device (102) according to claim 6, wherein the processing arrangement (104) is further configured to store only the set of bits (208) and the corresponding prefix in a cache.

8. A network (506) comprising a first host device (508A) according to any preceding claim and a second host device (508B) according to any preceding claim, wherein the first host device (508A) is associated with a first set of bits and the second host device (508B) is associated with a second set of bits.

9. The network (506) according to claim 8, wherein there is no overlap between the first and second set of bits.

10. A method (600) for a host device (102) associated with one or more addresses, the method (600) comprising
associating the one or more addresses to a set of bits (208) in a network layer address field (202), wherein the set of bits (208) identifies which address is intended, wherein the bits in the set of bits (208) are randomly distributed,
receiving a data packet having a network layer address field, and
determining which address to direct the data packet based solely on the set of bits (208).

11. A computer program product comprising program instructions for performing the method (600) according to claim 10, when executed by one or more processors in a network.

## Amended claims

### Amended claims in accordance with Rule 137(2) EPC.

1. A host device (102) configured to operate in a network, the host device (102) being associated with one or more addresses, wherein the host device (102) comprises a processing arrangement (104) configured to
associate the one or more addresses to a set of bits (208) in a network layer address field (202),
wherein the network layer address field (202) is an IPv6 address field,
wherein the set of bits (208) identifies which address is intended,
wherein the set of bits (208) comprises less bits than the network layer address field (202),
wherein the bits in the set of bits (208) are randomly distributed in the network layer address field (202),
receive a data packet having a network layer address field, and
determine which address to direct the data packet based solely on the set of bits (208).

2. The host device according to claim 1, wherein the at least some of the bits in the set of bits (208) are non-contiguous.

3. The host device (102) according to claim 1 or 2, wherein the set of bits (208) are indicated using extensions to a Router Advertisement protocol.

4. The host device (102) according to any preceding claim, wherein the processing arrangement (104) is further configured to limit address tracking entries in a Neighbor Discovery Protocol cache to the set of bits (208) only.

5. The host device (102) according to any preceding claim, wherein the processing arrangement (104) is further configured to update the set of bits (208) periodically.

6. The host device (102) according to any preceding claim, wherein the set of bits (208) are included in a suffix for a global address, the global address comprising a prefix-address and a suffix address, wherein the set of bits (208) are part of a per-prefix address pool.

7. The host device (102) according to claim 6, wherein the processing arrangement (104) is further configured to store only the set of bits (208) and the corresponding prefix in a cache.

8. A network (506) comprising a first host device (508A) according to any preceding claim and a second host device (508B) according to any preceding claim, wherein the first host device (508A) is associated with a first set of bits and the second host device (508B) is associated with a second set of bits,
wherein positions of the first set of bits in the network layer address field (202) are the same as positions of the second set of bits in the network layer address field (202), and
wherein bit values of the first set of bits are different from bit values of the first set of bits.

9. A method (600) for a host device (102) associated with one or more addresses, the method (600) comprising associating the one or more addresses to a set of bits (208) in a network layer address field (202),
wherein the network layer address field (202) is an IPv6 address field,
wherein the set of bits (208) identifies which address is intended,
wherein the set of bits (208) comprises less bits than the network layer address field (202),
wherein the bits in the set of bits (208) are randomly distributed in the network layer address field (202),
receiving a data packet having a network layer address field, and
determining which address to direct the data packet based solely on the set of bits (208).

10. A computer program product comprising program instructions for performing the method (600) according to claim 9, when executed by one or more processors in a network.
